# EUROPEAN PATENT APPLICATION

(11) **EP 2 789 955 A2**
(43) Date of publication of application: **15.10.2014**
(21) Application number: 14164049.0
(22) Date of filing: 09.04.2014
(51) Int. Cl.: F25D 29/00

(54) **Refrigerator and mobile terminal for food management**

(30) Priority: 09.04.2013 KR 20130038753
(71) Applicant: Samsung Electronics Co., Ltd., Suwon-si, Gyeonggi-do 443-742 (KR)
(72) Inventor: KIM, Se Il, Gyeonggi-do (KR); JO, Su Ho, Gyeonggi-do (KR); CHA, Jae Hoon, Gyeonggi-do (KR); HAN, Na Jeong, Gyeonggi-do (KR); MYOUNG, Kwan Joo, Gyeonggi-do (KR)
(74) Representative: Walaski, Jan Filip

(57) **Abstract**

A refrigerator includes storage chambers storing foods, cooling devices cooling the storage chambers, a display unit displaying a picture to manage foods, a communication unit receiving product information of products purchased by a user from a seller server, and a control unit extracting product information of food items purchased by the user from the product information of the products and controlling the display unit so as to display food management information generated based on the extracted product information of the food items. The refrigerator may display management information of the food items purchased by the user without separate input of the product information of the food items purchased by the user.

## Description

The present invention relates to a refrigerator and a mobile terminal for food management which may extract product information of food items from an electronic receipt received from a seller.

In general, a refrigerator is an electric home appliance which includes storage chambers to store food and cool air supply devices to supply cool air to the storage chambers and stores food in a fresh state.

In order to meet recent user requirements, a refrigerator performs a food management function to display food items stored in storage chambers, to manage storage periods of the respective food items, and to warn a user of food items, the storage periods of which have expired.

However, in case of the conventional food management function, when a food item is stored in the storage chamber, a user needs to separately input information of the food item to be stored and is thus inconvenienced. That is, when the user stores a purchased food item in the refrigerator, the user needs to input the name, storage period, etc., of the food item through an operation panel provided on the refrigerator.

Moreover, management information of food items stored in the refrigerator is displayed on the refrigerator and thus, the user visiting a market to purchase food may not confirm product information of food items which need to be purchased.

Therefore, it is an aspect of the present disclosure to provide a refrigerator which extracts product information of food items based on an electronic receipt issued when a user purchases the food items and displays management information of food items stored in storage chambers.

It is another aspect of the present disclosure to provide a mobile terminal which displays management information of food items stored in a refrigerator so that a user may confirm the management information of the food items stored in the refrigerator any time.

Additional aspects of the disclosure will be set forth in part in the description which follows and, in part, will be apparent from the description, or may be learned by practice of the disclosure.

In accordance with one aspect of the present disclosure, a refrigerator includes storage chambers storing foods, cooling devices cooling the storage chambers, a display unit displaying a picture to manage foods, a communication unit receiving product information of products purchased by a user from a seller server, and a control unit extracting product information of food items purchased by the user from the product information of the products and controlling the display unit so as to display food management information generated based on the extracted product information of the food items.

The communication unit may receive an electronic receipt including the product information of the products from the seller server.

The electronic receipt may be in the form of one of text, eXtensible Markup Language (XML), and JavaScript Object Notation (JSON) including the product information of the products. The electronic receipt may be received through a text message or an exclusive program for electronic receipts.

The control unit may extract the product information of the food items by extracting the names of the products included in the product information of the products and comparing the names of the products with a food item list received from the seller server.

The refrigerator may further include a storage unit storing the food management information and the names of food items, and the control unit may extract the product information of the food items by extracting the names of the products included in the product information of the products and comparing the names of the products with the names of the food items stored in the storage unit.

The control unit may control the communication unit to request an external server to search the names of the food items included in the product information of the products and extract the product information of the food items based on a response from the external server.

The food management information may include the names of the food items, the categories to which the food items belong, the storage chambers in which the food items will be stored, and the storage periods of the food items.

The control unit may extract the names of the food items based on the product information of the food items and judge the categories to which the food items belong, the storage chambers in which the food items will be stored, and the storage periods of the food items based on the names of the food items.

The control unit may control the communication unit to transmit the food management information to a mobile terminal of the user or to receive food management information generated by the mobile terminal.

In accordance with another aspect of the present disclosure, a mobile terminal displaying food management information to manage foods stored in a refrigerator includes a display unit displaying a stored food management picture to display the food management information, a communication unit receiving product information of products purchased by a user from a seller server or a POS terminal, and a control unit extracting product information of food items purchased by the user from the product information of the products and controlling the display unit so as to display food management information generated based on the extracted product information of the food items.

The communication unit may receive an electronic receipt including the product information of the products from the seller server or the POS terminal.

The electronic receipt may be in the form of one of text, eXtensible Markup Language (XML), and JavaScript Object Notation (JSON) including the product information of the products. The electronic receipt may be received through a text message or an exclusive program for electronic receipts.

The control unit may extract the product information of the food items by extracting the names of the products included in the product information of the products and comparing the names of the products with a food item list received from the seller server.

The mobile terminal may further include a storage unit storing the food management information and the names of food items, and the control unit may extract the product information of the food items by extracting the names of the products included in the product information of the products and comparing the names of the products with the names of the food items stored in the storage unit.

The control unit may control the communication unit to request an external server to search the names of the food items included in the product information of the products and extract the product information of the food items based on a response from the external server.

The food management information may include the names of the food items, the categories to which the food items belong, the storage chambers in which the food items will be stored, and the storage periods of the food items.

The control unit may extract the names of the food items based on the product information of the food items and judge the categories to which the food items belong, the storage chambers in which the food items will be stored, and the storage periods of the food items based on the names of the food items.

The control unit may control the communication unit to transmit the food management information to the refrigerator or to receive food management information generated by the refrigerator.

In accordance with a further aspect of the present disclosure, a food management method to manage foods stored in a refrigerator includes receiving product information of products purchased by a user from a seller server or a POS terminal, extracting product information of food items purchased by the user from the product information of the products, generating food management information of the food items based on the extracted product information of the food items, and displaying the generated food management information.

The reception of the product information of the product may include receiving an electronic receipt for the products purchased by the user.

The electronic receipt may be in the form of one of text, eXtensible Markup Language (XML), and JavaScript Object Notation (JSON) including the product information of the products. The electronic receipt may be received through a text message or an exclusive program for electronic receipts.

The extraction of the product information of the food items may include extracting the names of the products included in the product information of the products and comparing the names of the products with a food item list received from the seller server.

The extraction of the product information of the food items may include extracting the names of the products included in the product information of the products and comparing the names of the products with the names of food items stored in a storage unit of the refrigerator.

The extraction of the product information of the food items may include requesting an external server to search the names of the food items included in the product information of the products and extracting the product information of the food items based on a response from the external server.

The food management information may include the names of the food items, the categories to which the food items belong, the storage chambers in which the food items will be stored, and the storage periods of the food items.

The generation of the food management information may include extracting the names of the food items based on the product information of the food items and judging the categories to which the food items belong, the storage chambers in which the food items will be stored, and the storage periods of the food items based on the names of the food items.

These and/or other aspects of the disclosure will become apparent and more readily appreciated from the following description of the embodiments, taken in conjunction with the accompanying drawings of which:
FIG. 1 is a view illustrating a food management system in accordance with one embodiment of the present disclosure;
FIG. 2 is a block diagram illustrating a control flow of a POS terminal in accordance with one embodiment of the present disclosure;
FIG. 3 is a block diagram illustrating a control flow of a seller server in accordance with one embodiment of the present disclosure;
FIG. 4 is a perspective view illustrating the external appearance of a refrigerator in accordance with one embodiment of the present disclosure;
FIG. 5 is a perspective view illustrating storage chambers of the refrigerator in accordance with the embodiment of the present disclosure;
FIG. 6 is a block diagram illustrating a control flow of the refrigerator in accordance with the embodiment of the present disclosure;
FIG. 7 is a front view illustrating the external appearance of a mobile terminal in accordance with one embodiment of the present disclosure;
FIG. 8 is a block diagram illustrating a control flow of the mobile terminal in accordance with the embodiment of the present disclosure;
FIG. 9A is a flowchart illustrating transmission of product information to a mobile terminal or a refrigerator by a POS terminal or a seller server in accordance with one embodiment of the present disclosure, if a user purchases products in a store of a seller;
FIG. 9B is a flowchart illustrating transmission of product information to a mobile terminal or a refrigerator by a seller server in accordance with one embodiment of the present disclosure, if a user purchases products through the seller server;
FIG. 10A is a flowchart illustrating generation of food management information using product information by a refrigerator in accordance with one embodiment of the present disclosure;
FIG. 10B is a flowchart illustrating generation of food management information using product information by a mobile terminal in accordance with one embodiment of the present disclosure;
FIGS. 11A to 11D are views illustrating pictures displaying food management information in a refrigerator in accordance with one embodiment of the present disclosure; and
FIGS. 12A to 12D are views illustrating pictures displaying food management information in a mobile terminal in accordance with one embodiment of the present disclosure.

Reference will now be made in detail to the embodiments of the present disclosure, examples of which are illustrated in the accompanying drawings, wherein like reference numerals refer to like elements throughout.

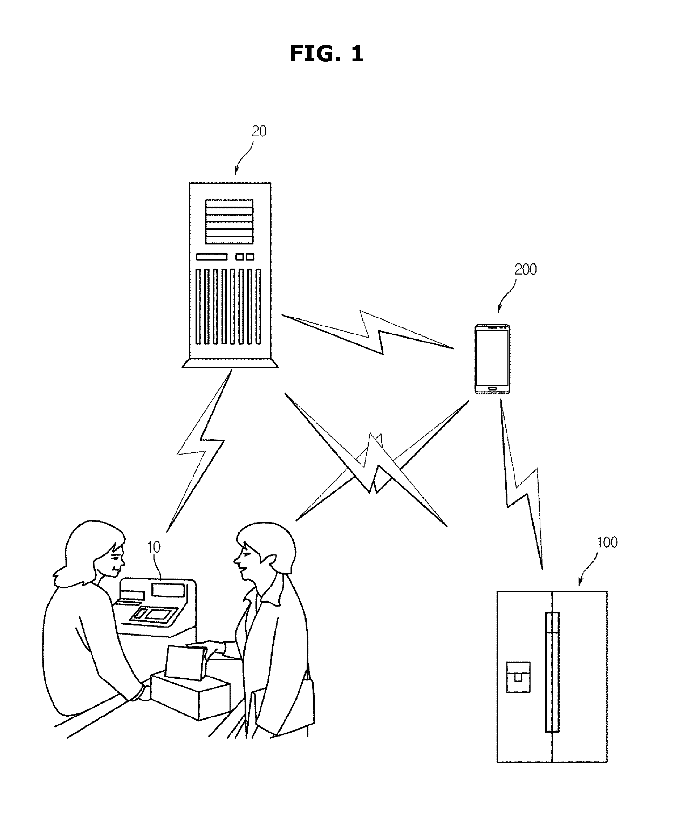

FIG. 1 is a view illustrating a food management system in accordance with one embodiment of the present disclosure.

With reference to FIG. 1, a food management system 1 includes a point of sale (POS) terminal 10 acquiring product information of products purchased by a user and user identification information, a seller server 20 transmitting the product information of the products purchased by the user to the user based on the user identification information, a mobile terminal 200 extracting product information of food items from the received product information and displaying food management information based on the extracted product information of the food items, and a refrigerator 100 storing the food items purchased by the user and food management information of stored food items.

As exemplarily shown in FIG. 1, if a user purchases products, a seller inputs product information of products to be purchased by the user to the POS terminal 10, and calculates the total costs paid by the user by extracting prices of the products from the product information input to the POS terminal 10.

The user may pay for the products through a credit card or cash and input user identification information to the POS terminal 10 during a process of paying for the products. Here, the identification information may be the contact number of the user and include the name or the nickname of the user if the user is registered in the seller server 20 which will be described later.

When the user identification information is input, the POS terminal 10 transmits the user identification information and the product information of the products purchased by the user to the seller server 20 which will be described later. Further, even if the user does not input the user identification information to the POS terminal 10, the POS terminal 10 may transmit the product information directly to the mobile terminal 200 of the user using local wireless communication. Although this will be described later, the product information transmitted to the mobile terminal 200 of the user by the POS terminal 10 may take the form of an electronic receipt.

The seller server 20 receives the user identification information and the product information of the products purchased by the user from the POS terminal 10, and transmits the product information to the mobile terminal 200 or the refrigerator 100 corresponding to the user identification information. Further, if the user purchases products through the seller server 20, the seller server 20 may request that the user input the user identification information and, when the user inputs the identification information, transmit the product information of the products purchased by the user to the mobile terminal 200 or the refrigerator 100 of the user according to user' selection. As described above, the product information transmitted to the mobile terminal 200 or the refrigerator 100 of the user by the POS terminal 10 or the seller server 20 may take the form of an electronic receipt. Such an electronic receipt includes product information of products purchased by the user, such as the names and prices, information of the seller, and information, such as the payment means of the user. The electronic receipt may be in eXtensible Markup Language (XML) or JavaScript Object Notation (JSON) for transmission through the Internet, or plain-text.

When the mobile terminal 200 receives the product information, the mobile terminal 200 extracts product information of food items from the received product information, generates food management information to manage food items stored in the refrigerator 100, which will be described later, based on the extracted product information of the food items, and displays the generated food management information to the user. Further, the mobile terminal 200 may transmit the food management information to the refrigerator 100.

The refrigerator 100 stores the food items from among the products purchased by the user in a frozen state or a refrigerated state. Further, when the refrigerator 100 receives the product information including product information of food items, the refrigerator 100 extracts the product information of the food items from the received product information, generates food management information to manage food items based on the extracted product information of the food items, and displays the generated food management information. Further, the refrigerator 100 may transmit the food management information to the mobile terminal 200.

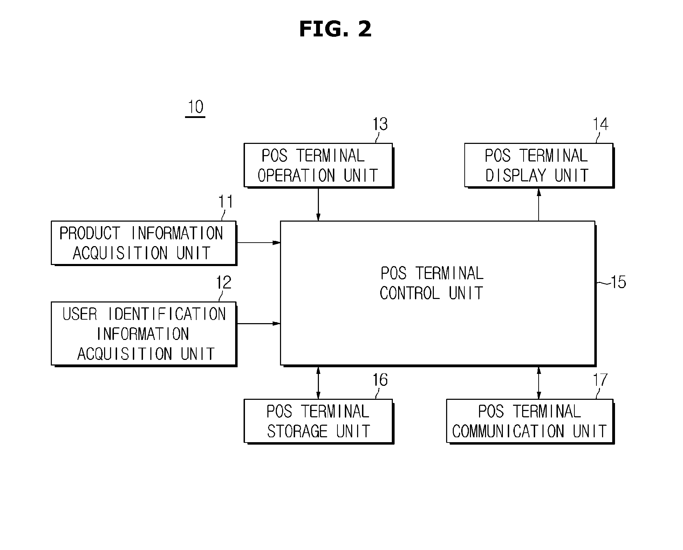

FIG. 2 is a block diagram illustrating a control flow of a POS terminal in accordance with one embodiment of the present disclosure.

With reference to FIG. 2, the POS terminal 10 includes a product information acquisition unit 11, an identification information acquisition unit 12, a POS terminal operation unit 13, a POS terminal display unit 14, a POS terminal storage unit 16, a POS terminal communication unit 17, and a POS terminal control unit 15.

The product information acquisition unit 11 acquires product information displayed on a product or a package of the product. The product information may include the name, price, manufacturer, manufacturing date, etc. of the product and be displayed in the form of a barcode or a QR code. Thereby, the product information acquisition unit 11 may employ a barcode reader or a QR reader.

The identification information acquisition unit 12 acquires user identification information from a user. The user may provide the identification information to the POS terminal 10 through various ways, the contact number, name, identification card, etc. of the user. Thereby, the identification information acquisition unit 12 may employ various types of units. For example, the identification information acquisition unit 12 may employ a number pad allowing the user to directly input a contact number if the user inputs the contact number, employ a touchpad allowing the user to input the name of the user if the user inputs the name, and employ a card reader allowing the user to input identification information stored in an identification card if the user inputs the identification information through the identification card.

The POS terminal operation unit 13 receives an operation command of the POS terminal 10 from a seller. Further, if the product information acquisition unit 11 may not receive product information of products or if the identification information acquisition unit 12 may not receive user identification information, the POS terminal operation unit 13 may receive the product information of the products or the user identification information. For example, if product information displayed on a product takes a form which is not recognizable by the product information acquisition unit 11 or if product information displayed on a product is damaged, a seller may directly input the product information of the product by operating the POS terminal operation unit 13. Further, if user identification information takes a form which is not recognizable by the identification information acquisition unit 12, the seller may directly input the user identification information by operating the POS terminal operation unit 13. Such a POS terminal operation unit 13 may employ a button type switch, a membrane switch, or a touchpad.

The POS terminal display unit 14 displays operation information of the POS terminal 10 or an operation command input by a seller. Further, the POS terminal display unit 14 displays product information of a product purchased by a user, i.e., the name, price, etc., and displays the total sum of prices of products purchased by a user if the user purchases plural products. The POS terminal display unit 14 may employ a liquid crystal display (LCD) or a light emitting diode (LED) display.

The POS terminal storage unit 16 stores programs and data to control the POS terminal 10. Particularly, the POS terminal storage unit 16 may temporarily store the product information input through the product information acquisition unit 11 or the POS terminal operation unit 13 or the user identification information input through the identification information acquisition unit 12 or the POS terminal operation unit 13. The POS terminal storage unit 16 may employ a nonvolatile memory, such as a magnetic disc or a solid state disk, or a volatile memory, such as a DRAM or an SRAM.

The POS terminal communication unit 17 transmits the user identification information and the product information of products purchased by the user to the seller server 20 which will be described later, or transmits the product information of the products to the mobile terminal 200 of the user. The POS terminal communication unit 17 may employ a wireless communication module capable of performing wireless communication, such as wireless fidelity (Wi-Fi), Bluetooth, ZigBee, or near field communication (NFC), or a wired communication module capable of performing wired communication, such as Ethernet, RS-232, or RS-485. For example, the POS terminal communication unit 17 may transmit product information in the form of an electronic receipt to the mobile terminal 200 of the user through NFC communication, and transmit the user identification information and the product information of products purchased by the user to the seller server 20 through Ethernet communication.

The POS terminal control unit 15 controls the overall operation of the POS terminal 10. In more detail, the POS terminal control unit 15 controls the product information acquisition unit 11 to receive product information and controls the POS terminal display unit 14 to display the received product information. Further, the POS terminal control unit 15 controls the identification information acquisition unit 12 to receive user identification information and controls the POS terminal communication unit 17 to transmit the user identification information and the product information to the seller server 20. Moreover, the POS terminal control unit 15 may generate an electronic receipt based on the product information according to user' selection and control the POS terminal communication unit 17 to transmit the electronic receipt to the mobile terminal 200 of the user.

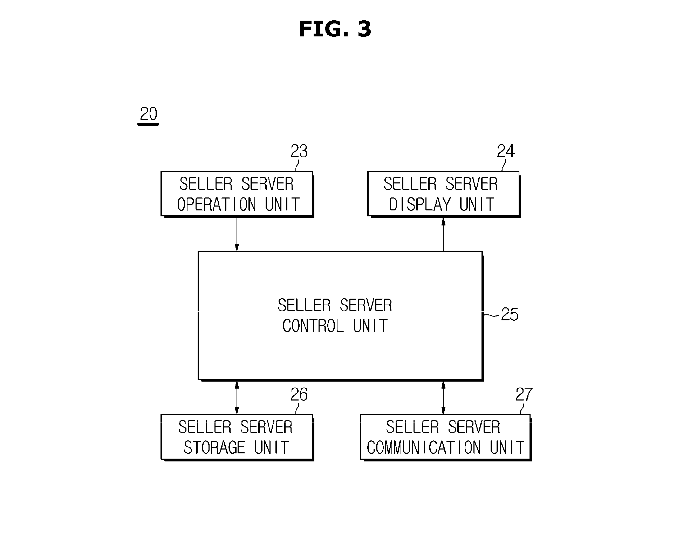

FIG. 3 is a block diagram illustrating a control flow of the seller server in accordance with the embodiment of the present disclosure.

With reference to FIG. 3, the seller server 20 includes a seller server operation unit 23, a seller server display unit 24, a seller server storage unit 26, a seller server communication unit 27, and a seller server control unit 25.

The seller server operation unit 23 receives an operation command regarding the seller server 20, and the seller server display unit 24 displays operation information of the seller server 20.

The seller server storage unit 26 stores programs and data to control the seller server 20. Particularly, the seller server storage unit 26 may store personal information of a user providing the personal information. Such personal information may include identification information which the user inputs through the POS terminal 10, and particularly include information (contact number) of the mobile terminal 200 of the user to transmit product information to the mobile terminal 200 of the user. The seller server storage unit 26 may employ a nonvolatile memory, such as a magnetic disc or a solid state disk, or a volatile memory, such as a DRAM or an SRAM.

The seller server communication unit 27 receives user identification information and product information of products purchased by the user from the POS terminal 10 and transmits the product information to the mobile terminal 200 of the user. Further, the seller server communication unit 27 may receive a purchase request from the user and user identification information and transmit product information of products purchased by the user to the mobile terminal 200 or the refrigerator 100 of the user. The seller server communication unit 27 may employ a wireless communication module capable of performing wireless communication, such as wireless fidelity (Wi-Fi), Bluetooth, ZigBee, or near field communication (NFC), or a wired communication module capable of performing wired communication, such as Ethernet, RS-232, or RS-485.

The seller server control unit 25 controls the overall operation of the seller server 20. In more detail, when the seller server control unit 25 receives product information and user identification information from the POS terminal 10, the seller server control unit 25 generates an electronic receipt based on the product information, causes the seller server storage unit 26 to search the mobile terminal 200 of the user based on the user identification information, and controls the seller server communication unit 27 to transmit the electronic receipt to the mobile terminal 200 of the user. Further, when the user inputs a product purchase request to the seller server control unit 25, the seller server control unit 25 requests that the user input products to be purchased and user identification information and, when the user inputs the products to be purchased and the user identification information to the seller server control unit 25, the seller server control unit 25 controls the seller server communication unit 27 to transmit product information of products purchased by the user to the mobile terminal 200 or the refrigerator 100 of the user.

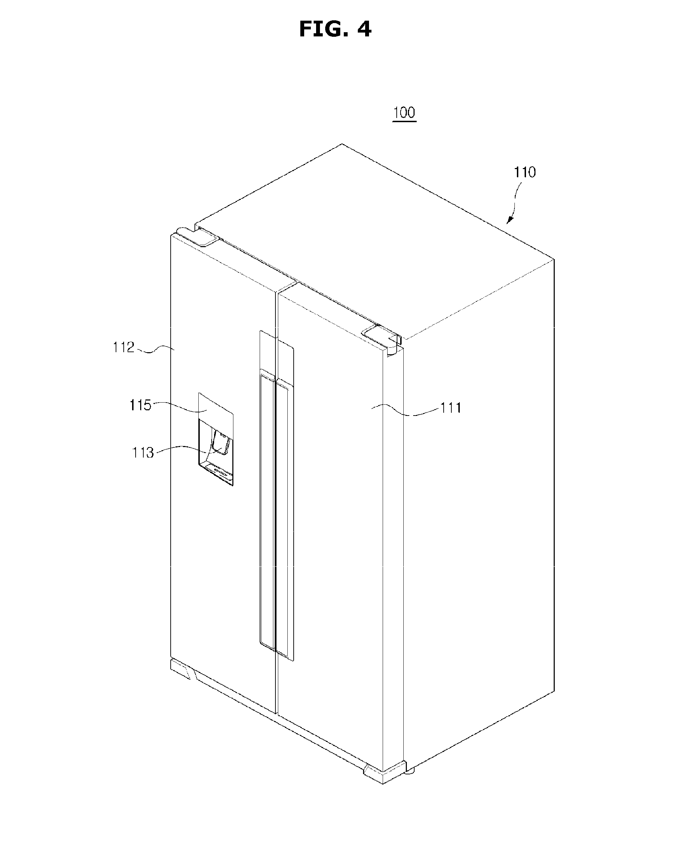

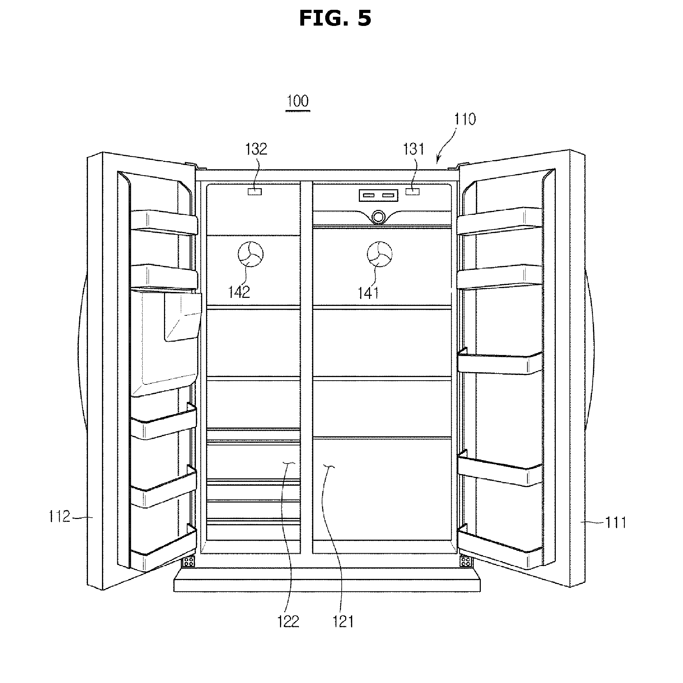

FIG. 4 is a perspective view illustrating the external appearance of a refrigerator in accordance with one embodiment of the present disclosure and FIG. 5 is a perspective view illustrating storage chambers of the refrigerator in accordance with the embodiment of the present disclosure.

With reference to FIGS. 4 and 5, the refrigerator 100 includes a main body 110 forming the external appearance of the refrigerator 100, storage chambers 121 and 122 provided within the main body 110 and storing food, doors 111 and 112 isolating the storage chambers 121 and 122 from the outside, and cooling devices (not shown) cooling the storage chambers 121 and 122.

The storage chambers 121 and 122 include a refrigerating chamber 121 storing food in a refrigerated state and a freezing chamber 122 storing food in a frozen state, and refrigerating chamber 121 and the freezing chamber 122 are divided by a central diaphragm. The front surfaces of the storage chambers 121 and 122 are opened so that a user may put food into and withdraw food from the storage chambers 121 and 122.

Temperature sensors 131 and 132 sensing the temperatures of the storage chambers 121 and 122 and air blower fans 141 and 142 supplying air cooled by the cooling devices (not shown) to the storage chambers 121 and 122 are provided on the inner walls of the storage chambers 121 and 122, and the temperature sensors 131 and 132 may employ thermistors, the electrical resistance values of which are varied according to temperature.

The doors 111 and 112 are provided on the front surface of the main body 110 and isolate the storage chambers 121 and 122 from the outside, and a dispenser 113 for dispensing purified water and a refrigerator operation panel 115 receiving an operation command regarding the refrigerator 100 and displaying operation information of the refrigerator 100 are provided at one side of the doors 111 and 112. The refrigerator operation panel 115 will be described in detail later.

The cooling device (not shown) includes a compressor (not shown) compressing refrigerant, a condenser (not shown) condensing the compressed refrigerant, an expansion valve (not shown) decompressing the condensed refrigerant, and an evaporator (not shown) evaporating the decompressed refrigerant. The refrigerant is condensed by the condenser (not shown) and thus discharges thermal energy to the outside of the refrigerator 100, and is evaporated by the evaporator (not shown) and thus absorbs thermal energy from air within the storage chamber 121 or 122 and cools the storage chamber 121 or 122.

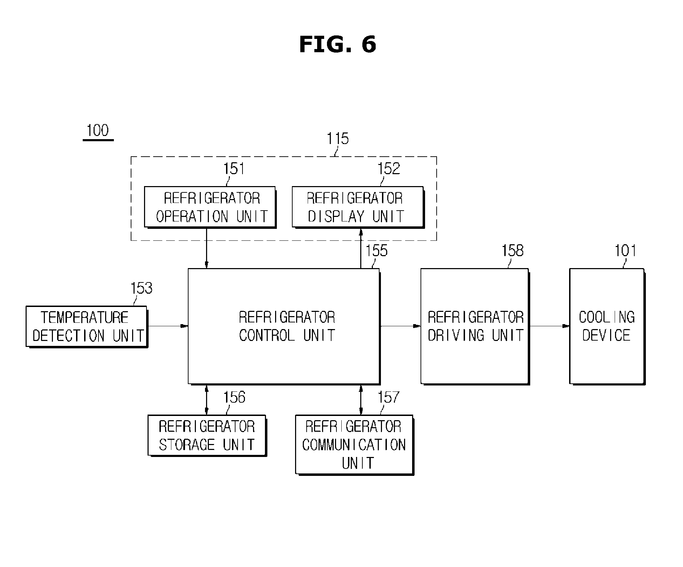

FIG. 6 is a block diagram illustrating a control flow of the refrigerator in accordance with the embodiment of the present disclosure.

With reference to FIG. 6, the refrigerator 100 includes a refrigerator operation panel 115, a temperature detection unit 153, a refrigerator storage unit 156, a refrigerator communication unit 157, a refrigerator driving unit 158, a cooling device 101, and a refrigerator control unit 155.

The cooling device 101 has been described above and a detailed description thereof will thus be omitted because it is considered to be unnecessary.

The refrigerator operation panel 115 includes a refrigerator operation unit 151 receiving an operation command regarding the refrigerator 100 and a food management command from a user, and a refrigerator display unit 152 displaying operation information of the refrigerator 100 corresponding to the operation command input by the user and food management information corresponding to a food management command of the user.

Further, the refrigerator operation unit 151 may employ a button type switch, a membrane switch, a touchpad, etc., and the refrigerator display unit 152 may employ a liquid crystal display (LCD) or a light emitting diode (LED) display. In the refrigerator operation panel 115, the refrigerator operation unit 151 and the refrigerator display unit 152 may be provided separately or be provided integrally as in a touchscreen panel.

The temperature detection unit 153 includes the temperature sensors 131 and 132 provided in the storage chambers 121 and 122 and outputs signals corresponding to the temperatures of the storage chambers 121 and 122.

The refrigerator storage unit 156 stores programs and data to control the refrigerator 100 and food management information to manage food stored in the storage chambers 121 and 122, and may employ a nonvolatile memory, such as a magnetic disc or a solid state disk, or a volatile memory, such as a DRAM or an SRAM.

The refrigerator communication unit 157 may receive product information of products purchased by the user from the seller server 20 described above with reference to FIG. 3, transmit food management information generated by the refrigerator control unit 155, which will be described later, to the mobile terminal 200, or receive food management information generated by the mobile terminal 200. The refrigerator communication unit 157 may employ a wireless communication module capable of performing wireless communication, such as wireless fidelity (Wi-Fi), Bluetooth, ZigBee, or near field communication (NFC), or a wired communication module capable of performing wired communication, such as Ethernet, RS-232, or RS-485.

The refrigerator driving unit 158 drives the cooling device 101 according to a control signal from the refrigerator control unit 155 which will be described later.

The refrigerator control unit 155 controls the overall operation of the refrigerator 100. In more detail, the refrigerator control unit 155 controls the refrigerator driving unit 158 according to a detection result of the temperature detection unit 15 and thus operates the cooling device 101. Further, refrigerator control unit 155 may generate food management information according to the food management command of the user through the refrigerator operation unit 153 or generate food management information based on product information of products received through the refrigerator communication unit 157. Further, the refrigerator control unit 155 may store the generated food management information in the refrigerator storage unit 156, display the generated food management information through the refrigerator display unit 152, and transmit the generated food management information to the mobile terminal 200 through the refrigerator communication unit 157. Moreover, when the refrigerator control unit 155 receives food management information from the mobile terminal 200 through the refrigerator communication unit 157, the refrigerator control unit 155 stores the received food management information in the refrigerator storage unit 156.

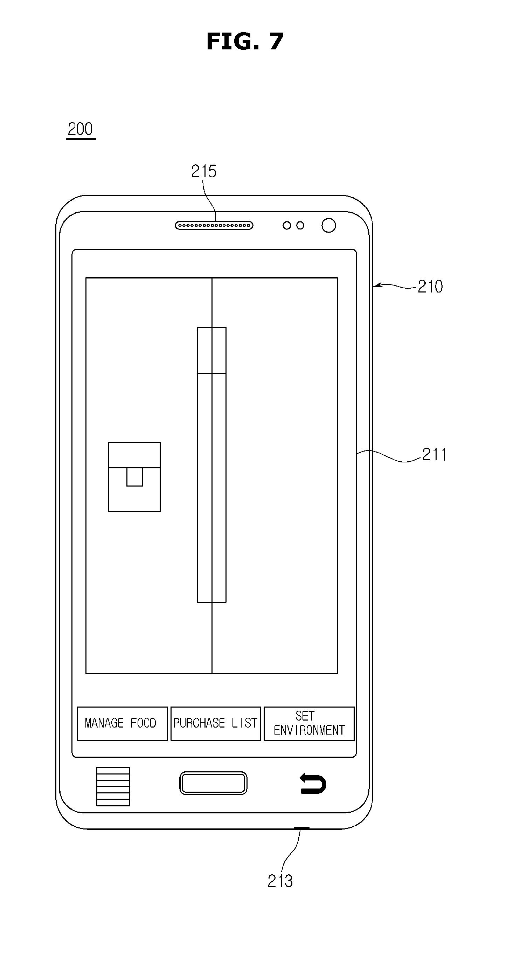

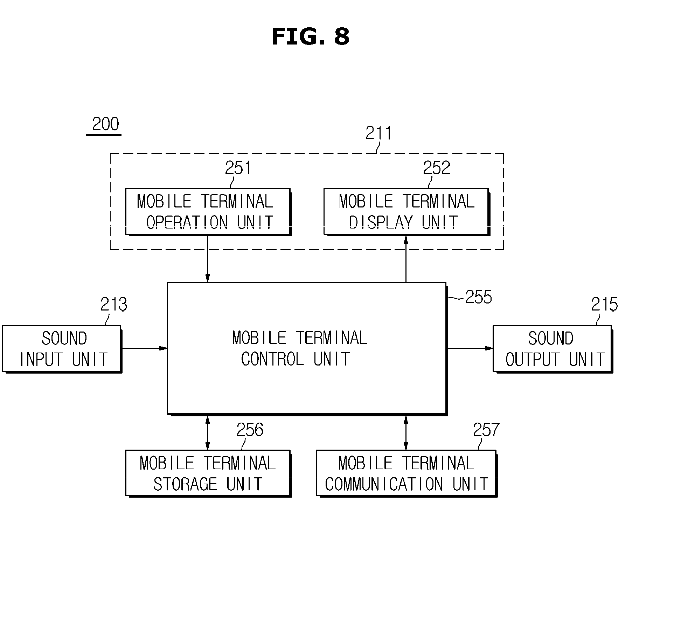

FIG. 7 is a front view illustrating the external appearance of a mobile terminal in accordance with one embodiment of the present disclosure and FIG. 8 is a block diagram illustrating a control flow of the mobile terminal in accordance with the embodiment of the present disclosure.

With reference to FIGS. 7 and 8, the mobile terminal 200 includes a main body 210 forming the external appearance of the mobile terminal 200, a mobile terminal operation panel 211 receiving an operation command from a user and displaying information corresponding to the received operation command, a sound output unit 213 from which sound is output, a sound input unit 215 to which sound is input, a mobile terminal storage unit 256 storing programs and data to control the mobile terminal 200, and a mobile terminal communication unit 257 communicating with an external device, such as the POS terminal, the seller server 20, or the refrigerator 100.

The mobile terminal operation panel 211 is provided on the front surface of the main body 210 and includes a mobile terminal operation unit 251 receiving an operation command from the user and a mobile terminal display unit 252 displaying operation information corresponding to the operation command input by the user.

The mobile terminal operation panel 251 may receive a control command to control the refrigerator 100 or a food management command to manage food stored in the refrigerator 100, and employ a button type switch, a membrane switch, a touchpad, etc. The mobile terminal display unit 252 may display operation information of the refrigerator 100 changed according to the control command regarding the refrigerator 100 input by the user or food management information corresponding to the food management command input by the user, and employ a liquid crystal display (LCD) or a light emitting diode (LED) display.

In the mobile terminal operation panel 211, the mobile terminal operation unit 251 and the mobile terminal display unit 252 may be provided separately or be provided integrally as in a touchscreen panel.

The sound input unit 213 receives a sound signal and converts the received sound signal into an electrical signal. The sound input unit 213 may employ a microphone. The sound output unit 215 converts the electrical signal into a sound signal recognizable by the user. The sound output unit 215 may employ a speaker.

The mobile terminal storage unit 256 stores programs and data to control the mobile terminal 200 and food management information to manage food stored in the storage chambers 121 and 122, and may employ a nonvolatile memory, such as a magnetic disc or a solid state disk, or a volatile memory, such as a DRAM or an SRAM.

The mobile terminal communication unit 257 may receive product information of products purchased by the user from the POS terminal 10 or the seller server 20 described above with reference to FIGS. 2 and 3, transmit food management information generated by the mobile terminal control unit 255, which will be described later, to the refrigerator 100, or receive food management information generated by the refrigerator 100. The mobile terminal communication unit 257 may employ a wireless communication module capable of performing wireless communication, such as wireless fidelity (Wi-Fi), Bluetooth, ZigBee, or near field communication (NFC).

The mobile terminal control unit 255 controls the overall operation of the mobile terminal 200. In more detail, the mobile terminal control unit 255 controls the mobile terminal communication unit 257, the mobile terminal storage unit 256, and the mobile terminal display unit 252 according to the operation command of the user input through the mobile terminal operation unit 251. Further, the mobile terminal control unit 255 may control the mobile terminal communication unit 257 to receive product information of products purchased by the user from the POS terminal 10 or the seller server 20, extract product information of food items from the received product information, generate food management information based on the extracted product information of the food items, display the generated food management information through the mobile terminal display unit 252, and transmit the generated food management information to the refrigerator 100 through the mobile terminal communication unit 257. Moreover, when the mobile terminal control unit 255 receives food management information from the refrigerator 100 through the mobile terminal communication unit 257, the mobile terminal control unit 255 stores the received food management information in the mobile terminal storage unit 256.

The food management system in accordance with one embodiment of the present disclosure has been described above. Hereinafter, a method of generating food management information and displaying the generated food management information using a food management system in accordance with one embodiment of the present disclosure will be described.

First, if a user purchases products, a method of transmitting product information of the products purchased by the user to the user will be described. The user may directly visit a store of a seller and purchase products, or purchase products through the seller server 20.

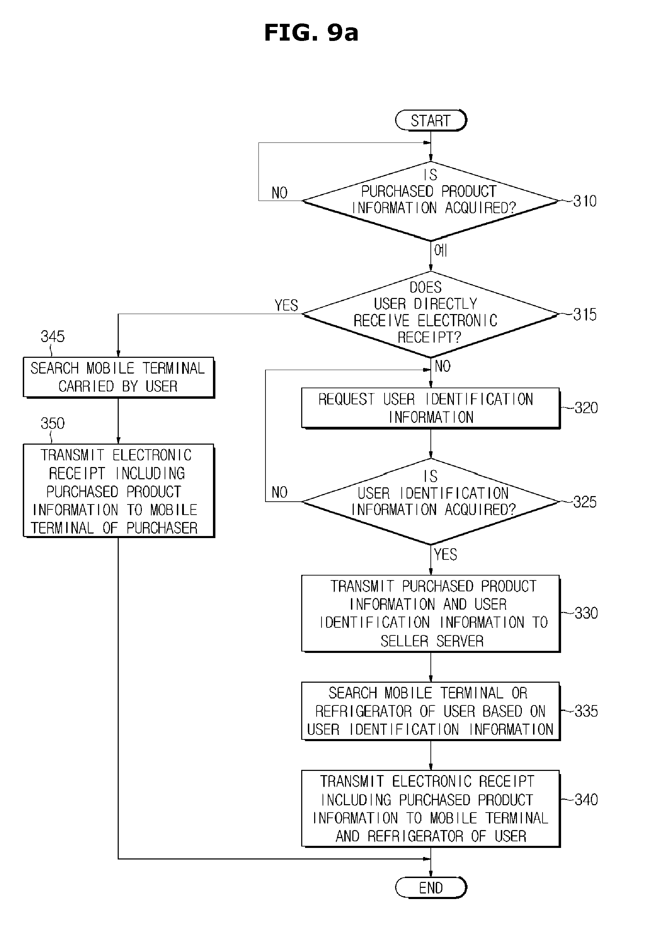

FIG. 9A is a flowchart illustrating transmission of product information to a mobile terminal or a refrigerator by a POS terminal or a seller server in accordance with one embodiment of the present disclosure, if a user purchases products in a store of a seller. With reference to FIG. 9A, the POS terminal 10 acquires product information of products which a user desires to purchase (Operation 310). If the user purchases products, a seller inputs product information through the product information acquisition unit 11, such as a barcode reader, of the POS terminal 10. Thereafter, when the user pays for the products, the seller issues a receipt together with the products to the user. Here, the user may receive an electronic receipt.

Thereafter, the user asks the user whether or not he/she wants to receive directly the electronic receipt (Operation 315). That is, the user may directly receive the electronic receipt in the mobile terminal 200 of the user from the POS terminal 10, or receive the electronic receipt through the seller server 20. The POS terminal 10 asks the user whether or not he/she directly receives the electronic receipt in the mobile terminal 200 of the user from the POS terminal 10.

If the user selects direct reception (Yes in Operation 315), the POS terminal 10 searches the mobile terminal 200 of the user (Operation 345). For example, if an NFC communication module is used, the POS terminal 10 may search the mobile terminal 200 of the user through whether or not the mobile terminal 200 of the user approaches the NFC communication module (not shown) included in the POS terminal communication unit 17.

When the mobile terminal 200 of the user has been searched, the POS terminal 10 transmits the electronic receipt type product information of the products purchased by the user to the mobile terminal 200 of the user (Operation 350). For example, if an NFC communication module is used, the POS terminal 10 transmits the electronic receipt to the mobile terminal 200 of the user through the NFC communication module (not shown) included in the POS terminal communication unit 17.

If the user does not select direct reception (No in Operation 315), the POS terminal 10 requests that the user input user identification information (Operation 320).

Thereafter, the POS terminal 10 judges whether or not user identification information is input (Operation 325). If the user identification information is not input, the POS TERMINAL 10 continuously requests that the user input user identification information.

If the user identification information is input, the POS terminal 10 transmits the purchased product information and the user identification information to the seller server 20 (Operation 330).

Thereafter, the seller server 20 searches the mobile terminal 200 or the refrigerator 100 of the user based on the user identification information (Operation 335). If the user is registered in the seller server 20, the seller server 20 may search information (a contact number, etc.) of the mobile terminal 200 of the user based on the user identification information. However, if the user is not registered in the seller server 20, the user identification information may include information (i.e., a contact number, etc.) of the mobile terminal 200 of the user.

Thereafter, the seller server 20 transmits the electronic receipt including the product information of the products purchased by the user to the mobile terminal 200 or the refrigerator 100 of the user (Operation 340). For example, the seller server 20 may transmit a text message to the mobile terminal 200 of the user using a telephone network, transmit the electronic receipt to a user's e-mail using the Internet, or transmit the electronic receipt using an exclusive program installed in the mobile terminal 200 of the user.

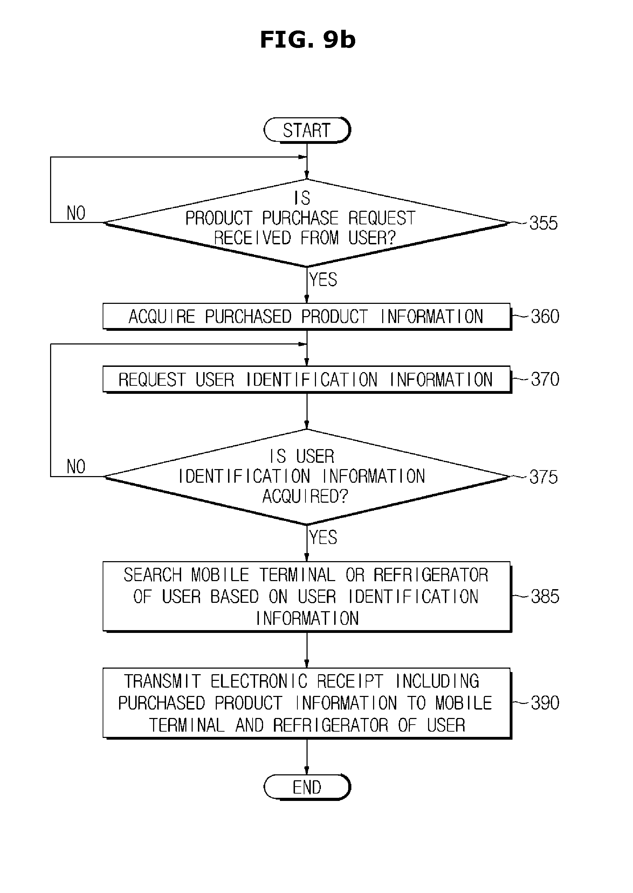

FIG. 9B is a flowchart illustrating transmission of product information to a mobile terminal or a refrigerator by a seller server in accordance with one embodiment of the present disclosure, if a user purchases products through the seller server.

With reference to FIG. 9B, the seller server 20 judges whether or not a product purchase request is received from a user (Operation 355).

When the product purchase request has been received, the seller server 20 acquires product information corresponding to the received product purchase request (Operation 360).

Thereafter, the seller server 20 requests that the user input user identification information (Operation 370).

Thereafter, the seller server 20 judges whether or not the user identification information is input (Operation 375). If the user identification information is not input, the seller server 20 continuously requests that the user input the user identification information.

If the user identification information is input, the seller server 20 searches the mobile terminal 200 or the refrigerator 100 of the user based on the user identification information (Operation 385). If the user is registered in the seller server 20, the seller server 20 may search information of the mobile terminal 200 of the user based on the user identification information.

Thereafter, the seller server 20 transmits an electronic receipt including product information of products purchased by the user to the mobile terminal 200 or the refrigerator 100 of the user (Operation 390). For example, the seller server 20 may transmit a text message to the mobile terminal 200 of the user using a telephone network, transmit the electronic receipt to a user's e-mail using the Internet, or transmit the electronic receipt using an exclusive program installed in the mobile terminal 200 of the user.

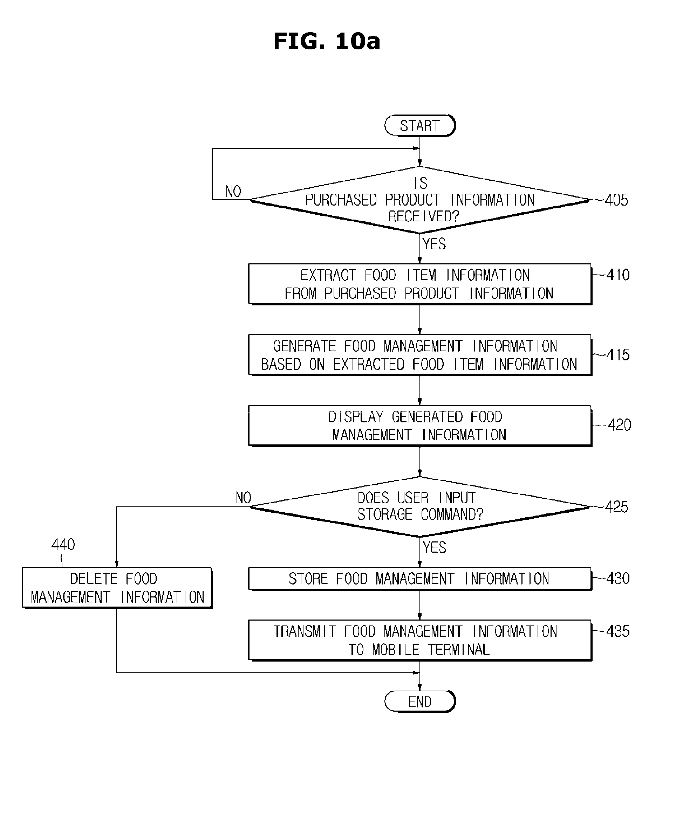

FIG. 10A is a flowchart illustrating generation of food management information using product information by a refrigerator in accordance with one embodiment of the present disclosure.

With reference to FIG. 10A, the refrigerator 100 judges whether or not product information of products purchased by a user is received (Operation 405). The product information may take the form of an electronic receipt. Such an electronic receipt may be in eXtensible Markup Language (XML) or JavaScript Object Notation (JSON) for transmission through the Internet, or plain-text. Further, the refrigerator 100 may receive the electronic receipt through an exclusive program for transmission of e-mail electronic receipts through the Internet or a program for food management.

When the purchased product information has been received, the refrigerator 100 extracts product information of food items from the purchased product information (Operation 410).

In more detail, when the purchased product information has been received, the refrigerator 100 converts the purchased product information into a type usable by a food management program of the refrigerator 100. For example, if an electronic receipt in the form of XML has been received using an XML parser, the refrigerator 100 may convert the electronic receipt into a type usable by the food management program of the refrigerator 100.

Further, the refrigerator 100 extracts product information of food items from the electronic receipt converted into the type usable by the food management program of the refrigerator 100. Extraction of product information of the food items may be performed by three methods below.

First, the refrigerator 100 may extract product information of food items by separately receiving a food item list from the seller server 20 and comparing the product information with the food item list.

Secondly, the refrigerator 100 may extract product information of food items by comparing the names of products included in the product information with the names of food items stored in the refrigerator. For example, if the name of a product consists of a plurality of words, the refrigerator 100 may extract product information of food items by dividing the name of the product into words and comparing the respective words with the names of the food items.

Thirdly, the refrigerator 100 may extract product information of food items by connecting with an external communication network and comparing the product information with a food item list provided from an external server (not shown) other than the seller server 20. For example, the refrigerator 100 may extract the names of products from the product information, execute an HTTP Request using a product name query, extract the names of food items from the names of the products by analyzing an HTTP Response, and extract product information of food items corresponding to the extracted names of the food items. Here, execution of the HTTP Request may be carried out by allowing the refrigerator 100 to use an HTTP Post or Get method, allowing the refrigerator 100 to input the name of a product as a search word and to request a search result, or allowing the refrigerator 100 to transmit the name of a product and request a search result through an Application Programming Interface (API). Further, analysis of the HTTP Response may include parsing the HTTP Response, extracting a category of a product from a parsed search result, and extracting an image of the product.

Thereafter, the refrigerator 100 generates food management information based on the extracted product information of food items (Operation 415). The food management information may include the names, images and categories of food items purchased by the user, storage chambers to store the food items, and storage periods of the food items.

Thereafter, the refrigerator 100 displays the generated food management information through the refrigerator display unit 152 (Operation 420). Display of the food management information by the mobile terminal 200 will be described in detail later.

Thereafter, the refrigerator 100 judges whether or not the user inputs a storage command of the food management information (Operation 425).

If the user does not input the storage command, the refrigerator 100 deletes the generated food management information (Operation 440).

If the user inputs the storage command, the refrigerator 100 stores the generated food management information (Operation 430) and transmits the food management information to the mobile terminal 200 so as to update the food management information stored in the mobile terminal 200 (Operation 435).

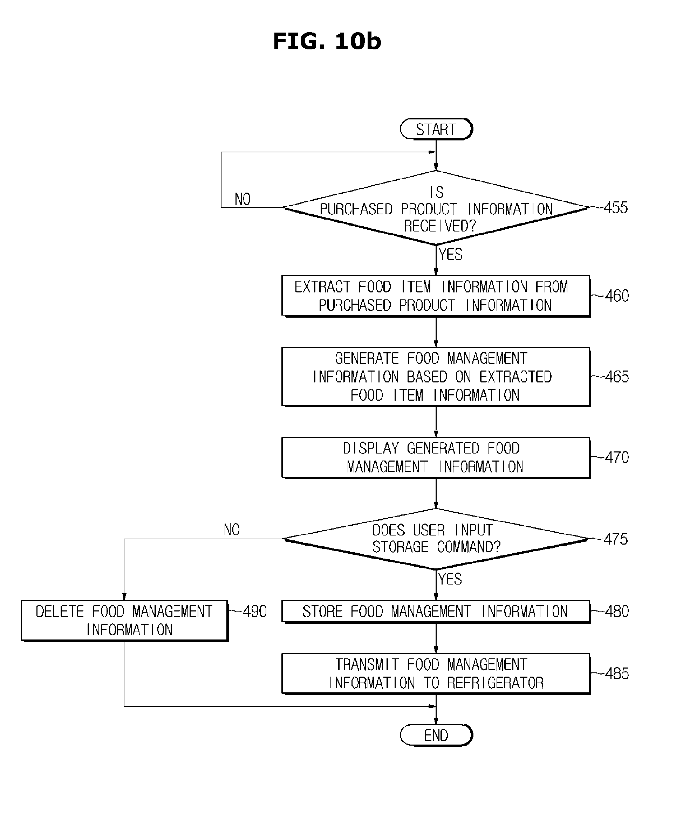

FIG. 10B is a flowchart illustrating generation of food management information using product information by a mobile terminal in accordance with one embodiment of the present disclosure.

With reference to FIG. 10B, the mobile terminal 200 judges whether or not purchased product information is received (Operation 455). The product information may take the form of an electronic receipt. Such an electronic receipt may be in eXtensible Markup Language (XML) or JavaScript Object Notation (JSON) for transmission through the Internet, or plain-text. Further, the mobile terminal 200 may receive the electronic receipt through a text message transmission service of a telephone network, an e-mail of the Internet, an exclusive program for electronic receipts, or a program for food management.

When the purchased product information has been received, the mobile terminal 200 extracts product information of food items from the purchased product information (Operation 460). Extraction of product information of food items from the purchased product information by the mobile terminal 200 is the same as extraction of product information of food items from the purchased product information by the refrigerator 100 with reference to FIG. 10A and a detailed description thereof will thus be omitted.

Thereafter, the mobile terminal 200 generates food management information based on the extracted product information of food items (Operation 465).

Thereafter, the mobile terminal 200 displays the generated food management information through the mobile terminal display unit 252 (Operation 470). Display of the food management information by the mobile terminal 200 will be described in detail later.

Thereafter, the mobile terminal 200 judges whether or not the user inputs a storage command of the food management information (Operation 475).

If the user does not input the storage command, the mobile terminal 200 deletes the generated food management information (Operation 490).

If the user inputs the storage command, the mobile terminal 200 stores the generated food management information (Operation 480) and transmits the food management information to the refrigerator 100 (Operation 485) so as to update the food management information stored in the refrigerator 100.

As above, reception of product information from the POS terminal 10 or the seller server 20 by the mobile terminal 200 or the refrigerator 100 and extraction of product information of food items based on the received product information by the mobile terminal 200 or the refrigerator 100 have been described.

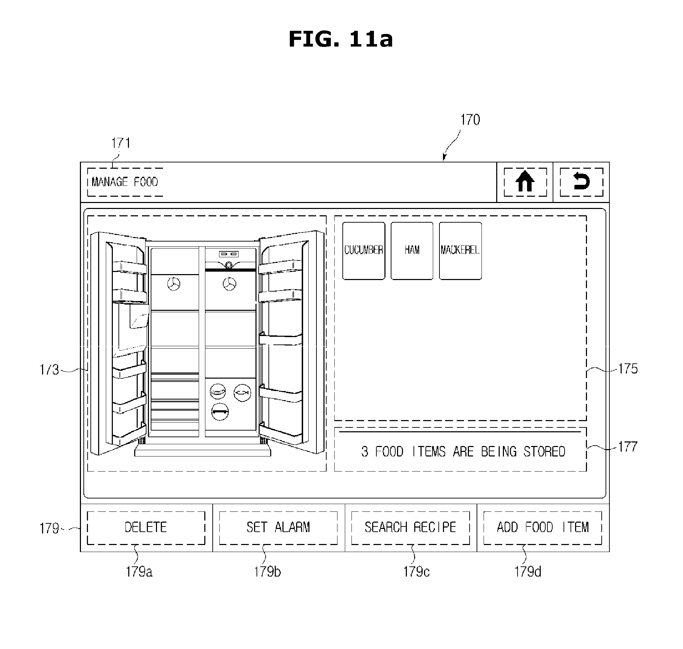

Hereinafter, generation of food management information by the mobile terminal 200 or the refrigerator 100 based on product information of food items will be described. FIGS. 11A to 11D are views illustrating pictures displaying food management information in a refrigerator in accordance with one embodiment of the present disclosure.

When a user inputs a food management command to the refrigerator 100, the refrigerator 100 displays a stored food management picture 170, as exemplarily shown in FIG. 11A.

With reference to FIG. 11A, the stored food management picture 170 includes a title display area 171 displaying the name of a picture displayed on the refrigerator display unit 152, a storage space display area 173 displaying the storage chambers 121 and 122 of the refrigerator 100, a stored food display area 175 displaying food items stored in the storage chambers 121 and 122 of the refrigerator 100, a message display area 177 displaying a message related to operation of the refrigerator 100, and a command input area 179 to input various commands for food management.

The storage space display area 173 displays the storage chambers 121 and 122 of the refrigerator 100 and displays food items, stored in the storage chambers 121 and 122, on the respective storage chambers 121 and 122. For example, if cucumber, ham, and mackerel are stored in the refrigerating chamber 121 of the refrigerator 100, as exemplarily shown in FIG. 11A, the storage space display area 173 may display icons corresponding to cucumber, ham, and mackerel in a region corresponding to the refrigerating chamber 121 of the refrigerator 100.

The stored food display area 175 displays the names of food items stored in the refrigerator 100. Here, the stored food display area 175 may display the names of food items in order of remaining storage periods. For example, the names of food items which have a short time to expire storage periods may be arranged at the upper and left regions, and the names of food items which have a long time to expire storage periods may be arranged at the lower and right regions. That is, with reference to FIG. 11A, among cucumber, ham, and mackerel displayed in the stored food display area 175, cucumber has the shortest time to expire the storage period and mackerel has the longest time to expire the storage period.

The message display area 177 displays the number of food items stored in the storage chambers 121 and 122 of the refrigerator 100. Although FIG. 11A illustrates the message display area 177 as displaying the total number of food items stored in the storage chambers 121 and 122 of the refrigerator, embodiments of the present disclosure are not limited thereto and the number of food items stored in each of the storage chambers 121 and 122 may be displayed. That is, the message display area 177 may display a message "o food items are being stored in the freezing chamber and 3 food items are being stored in the refrigerating chamber".

The command input area 179 includes a deletion command input sub-area 179a to delete a food item withdrawn from the storage chambers 121 and 122 of the refrigerator 100, an alarm set input sub-area 179b to set an alarm warning expiration of the storage period of a food item, a recipe search command input sub-area 179c to search recipes using a food item stored in the storage chambers 121 and 122 of the refrigerator, and a food addition input sub-area 179d to input a food item newly stored in the storage chambers 121 and 122 of the refrigerator 100.

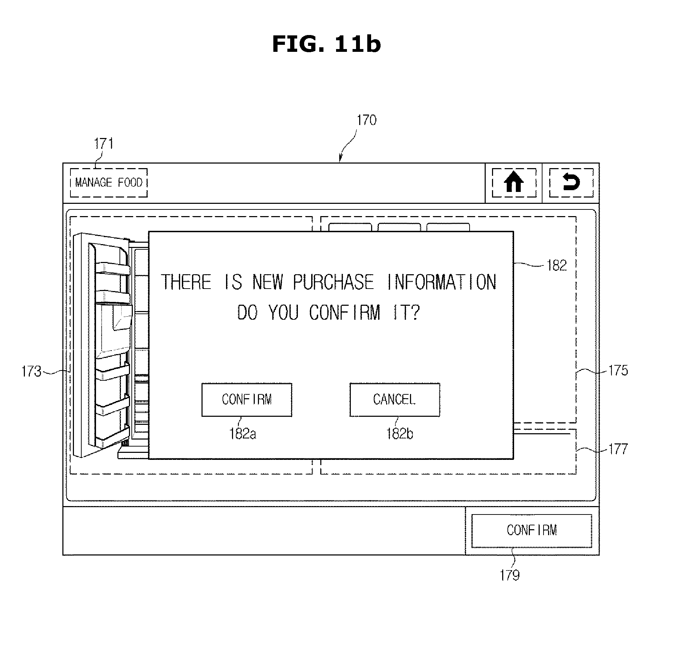

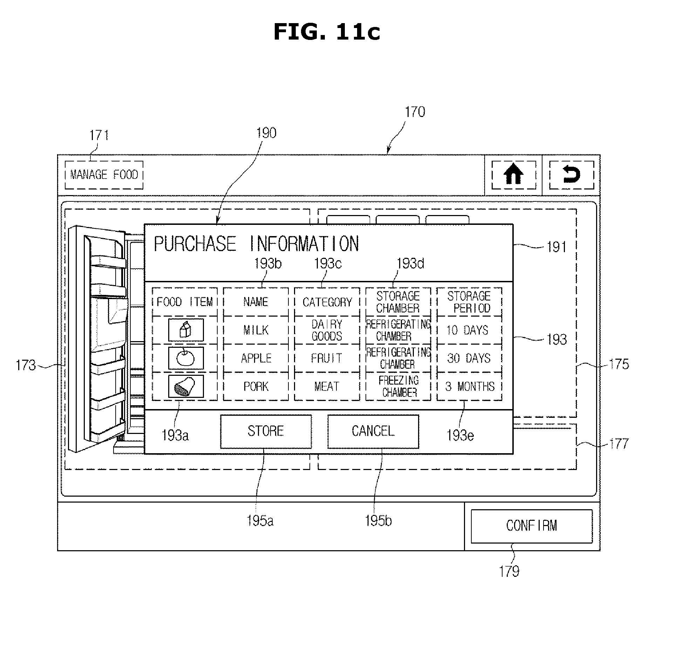

When the user inputs a food addition command by touching the food addition input sub-area 179d, the refrigerator 100 displays a stored food addition picture 180 shown in FIGS. 11B and 11C.

When the user inputs the food addition command, the refrigerator 100 judges whether or not product information of products purchased by the user is received and displays a purchased food confirmation picture 182, as exemplarily shown in FIG. 11B, upon judging that the product information has been received.

When the user touches a confirmation command input area 182a to confirm purchased products, the refrigerator 100 extracts product information of food items from the received product information and displays a purchased food display picture 190, as exemplarily shown in FIG. 11C, based on the extracted product information of the food items. Alternatively, the user may touch a cancellation command input area 182b.

The purchased food display picture 190 of the refrigerator 100 includes a title display area 191 displaying the name of a displayed picture, a food management information display area 193 displaying food management information of purchased food items, a storage command input area 195a to store the food management information of the purchased food items, and a cancellation command input area 195b to delete the food management information of the purchased food items.

The food management information display area 193 includes a food image display sub-area 193a displaying the images of food items, a food name display sub-area 193b displaying the name of the food items, a food category display area 193c displaying categories to which the food items belong, a recommended storage space display sub-area 193d displaying storage chambers in which the food items will be stored, and a storage period display sub-area 193e displaying the storage periods of the food items.

In more detail, the refrigerator 100 may display the images, names, categories, and storage periods of food items included in product information of the food items extracted from the received product information, judge the storage chambers 121 and 122 in which the food items will be stored based on the names of the food items, and display the storage chambers 121 and 122 in which the food items will be stored.

Here, the user may change the displayed food management information. For example, if the user wants to store pork in the refrigerating chamber 121, the user may change the freezing chamber, displayed as a recommended storage space of pork in the recommended storage space display sub-area 193d, into the refrigerating chamber and then correspondingly change the storage period displayed in the storage period display sub-area 193e.

The user having confirmed the food management information may store the displayed food management information through the storage command input area 195a or delete the displayed food management information through the deletion command input area 195b.

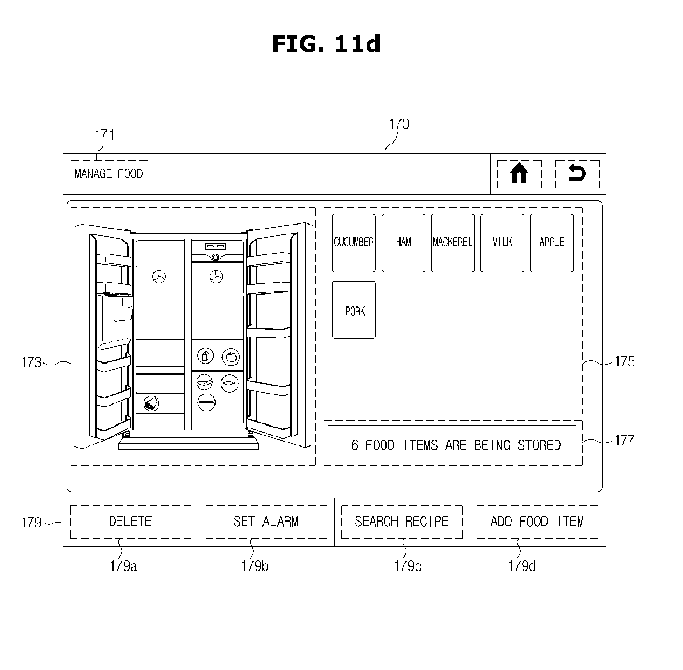

When the users input a storage command of the food management information, the refrigerator 100 additionally displays food management information of added food items in the stored food management picture 170. For example, as exemplarily shown in FIG. 11D, the stored food display area 175 additionally displays newly added food items, i.e., milk, apple, and pork, and the storage space display area 173 additionally displays icons corresponding to milk and apple in the refrigerating chamber and additionally displays an icon corresponding to pork in the freezing chamber.

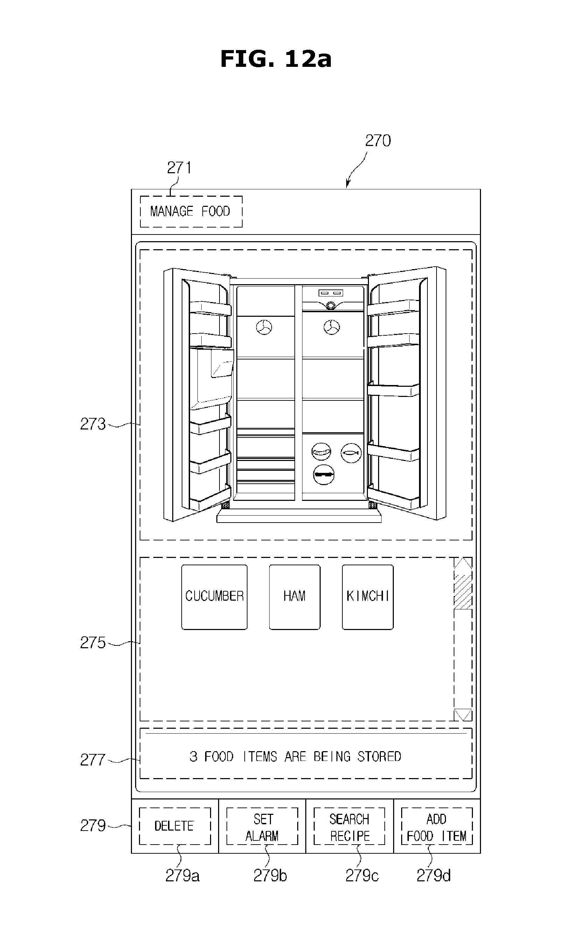

FIGS. 12A to 12D are views illustrating pictures displaying food management information in a mobile terminal in accordance with one embodiment of the present disclosure.

When a user inputs a food management command to the mobile terminal 200, the mobile terminal 200 displays a stored food management picture 270, as exemplarily shown in FIG. 12A.

With reference to FIG. 12A, the stored food management picture 270 includes a title display area 271 displaying the name of a picture displayed on the mobile terminal display unit 252, a storage space display area 273 displaying the storage chambers 121 and 122 of the refrigerator 100, a stored food display area 275 displaying food items stored in the storage chambers 121 and 122 of the refrigerator 100, a message display area 277 displaying a related message, and a command input area 279 to input various commands for food management.

The title display area 271, the storage space display area 273, the stored food display area 275, the message display area 277, and the command input area 279 of the mobile terminal 200 are the same as the title display area 171, the storage space display area 173, the stored food display area 175, the message display area 177, and the command input area 279 of the refrigerator 100 described above with reference to FIG. 11A, and a detailed description thereof will thus be omitted.

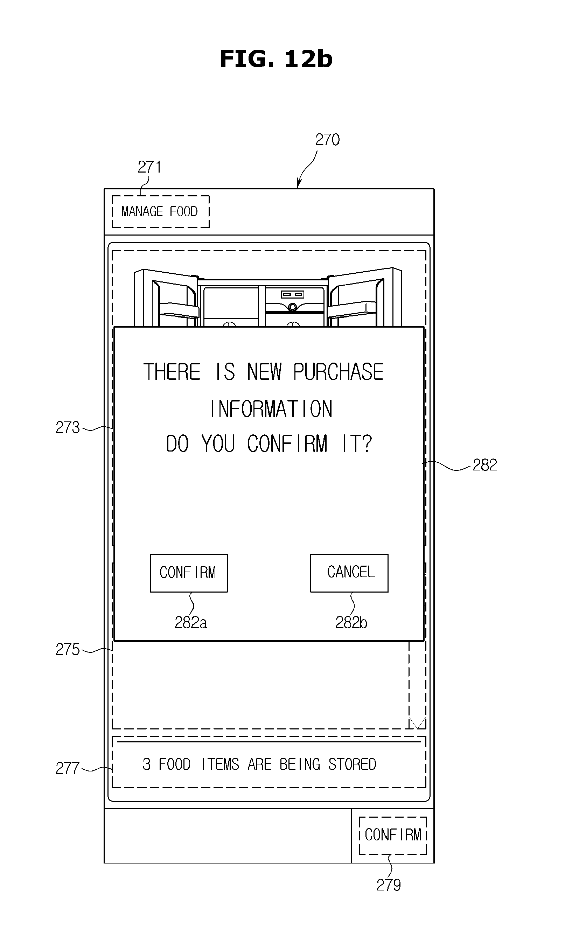

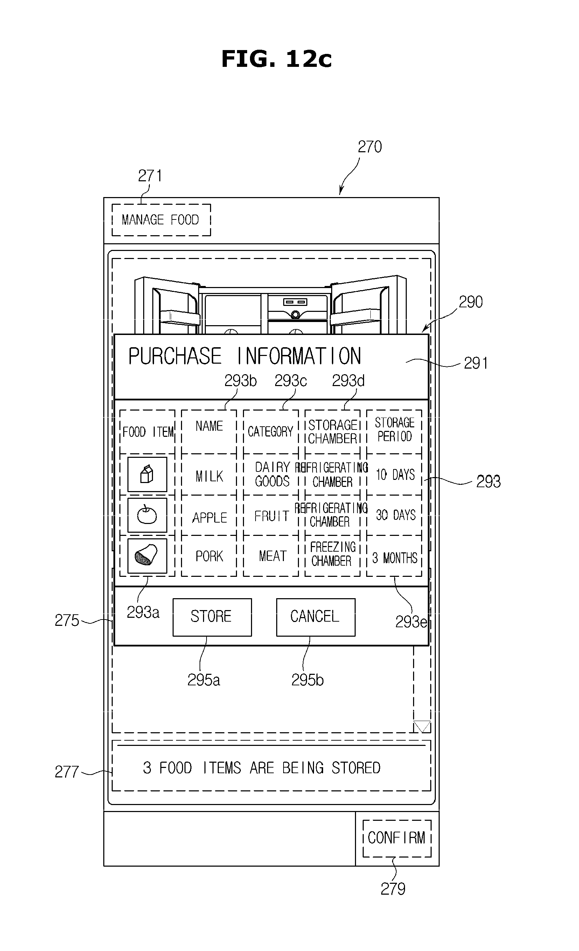

When the user inputs a food addition command by touching a food addition input sub-area 279d, the mobile terminal 200 displays a stored food addition picture 280 shown in FIGS. 12B and 12C.

When the user inputs the food addition command, the mobile terminal 200 judges whether or not product information of products purchased by the user is received and displays a purchased food confirmation picture 282, as exemplarily shown in FIG. 12B, upon judging that the product information has been received.

When the user touches a confirmation command input area 282a to confirm purchased products, the mobile terminal 200 extracts product information of food items from the received product information and displays a purchased food display picture 290, as exemplarily shown in FIG. 12C, based on the extracted product information of the food items.

The purchased food display picture 290 of the mobile terminal 200 includes a title display area 291 displaying the name of a displayed picture, a food management information display area 293 displaying food management information of purchased food items, a storage command input area 295a to store the food management information of the purchased food items, and a deletion command input area 295b to delete the food management information of the purchased food items.

The title display area 291, the food management information display area 293, the storage command input area 295a, and the deletion command input area 295b of the mobile terminal 200 are the same as the title display area 191, the food management information display area 193, the storage command input area 195a, and the deletion command input area 195b of the refrigerator 100 described above with reference to FIG. 11B, and a detailed description thereof will thus be omitted.

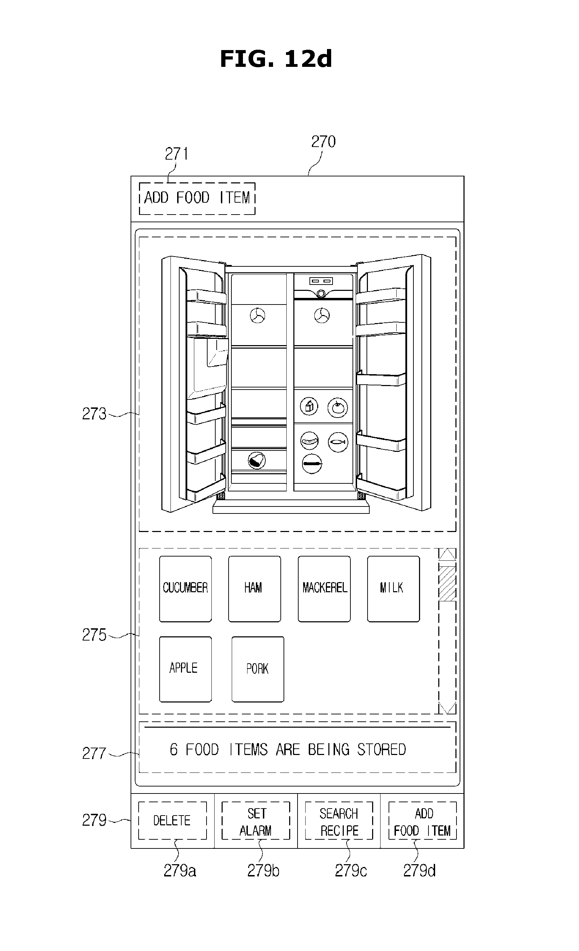

When the users input a storage command of the food management information, the mobile terminal 200 additionally displays food management information of added food items in the stored food management picture 270, as exemplarily shown in FIG. 12D.

As is apparent from the above description, a refrigerator in accordance with one embodiment of the present disclosure extracts product information of food items purchased by a user from an electronic receipt provided by a seller, generates food management information based on the extracted product information of the food items, and may thus display management information of the food items purchased by the user without separate input of product information of the food items purchased by the user.

Although a few embodiments of the present disclosure have been shown and described, it would be appreciated by those skilled in the art that changes may be made in these embodiments without departing from the principles of the invention, the scope of which is defined in the claims.

## Claims

1. A refrigerator comprising:
storage chambers for storing food;
cooling devices configured to cool the storage chambers;
a display unit configured to display a picture to manage food;
a communication unit configured to receive product information of products purchased by a user from a seller server; and
a control unit configured to extract food information of food items purchased by the user from the product information and controlling the display unit to display food management information generated based on the extracted food information.

2. The refrigerator according to claim 1, wherein the communication unit receives an electronic receipt including the product information from the seller server.

3. The refrigerator according to claim 1 or 2, wherein the control unit extracts names of the product included in the product information and comparing the names of the products with a food item list received from the seller server so as to extract the food information.

4. The refrigerator according to claim 1 or 2, further comprising a storage unit configured to store the food management information and the names of food items,
wherein the control unit extracts names of the products included in the product information and comparing the names of the products with the names of the food items stored in the storage unit so as to extract the food information.

5. The refrigerator according to any one of the preceding claims, wherein the control unit controls the communication unit to request an external server to search the names of the food items included in the product information and extracts the food information based on a response from the external server.

6. The refrigerator according to any one of the preceding claims, wherein the food management information includes the names of the food items, the categories to which the food items belong, the storage chambers in which the food items will be stored, and the storage periods of the food items.

7. The refrigerator according to claim 6, wherein the control unit extracts the names of the food items based on the food information and judges the categories to which the food items belong, the storage chambers in which the food items will be stored, and the storage periods of the food items based on the names of the food items.

8. The refrigerator according to claim 6 or 7, wherein the control unit controls the communication unit to transmit the food management information to a mobile terminal of the user or to receive food management information generated by the mobile terminal.

9. A food management method to manage food stored in a refrigerator, comprising:
receiving product information of products purchased by a user from at least one of a seller server and a POS terminal;
extracting food information of food items purchased by the user from the product information;
generating food management information of the food items based on the extracted food information; and
displaying the generated food management information.

10. The food management method according to claim 9, wherein the reception of the product information of the product includes receiving an electronic receipt for the products purchased by the user.

11. The food management method according to claim 9 or 10, wherein the extraction of the product information of the food items includes:
extracting the names of the products included in the product information; and
comparing the names of the products with a food item list received from the seller server.

12. The food management method according to claim 9 or 10, wherein the extraction of the product information of the food items includes:
extracting the names of the products included in the product information ; and
comparing the names of the products with the names of food items stored in a storage unit of the refrigerator.

13. The food management method according to any one of claims 9 to 12, wherein the extraction of the product information of the food items includes:
requesting an external server to search the names of the food items included in the product information; and
extracting the food information based on a response from the external server.

14. The food management method according to any one of claims 9 or 13, wherein the food management information includes the names of the food items, the categories to which the food items belong, the storage chambers in which the food items will be stored, and the storage periods of the food items.

15. The food management method according to claim 14, wherein the generation of the food management information includes:
extracting the names of the food items based on the food information; and
judging the categories to which the food items belong, the storage chambers in which the food items will be stored, and the storage periods of the food items based on the names of the food items.
